(19) Europäisches Patentamt / European Patent Office / Office européen des brevets

(11) **EP 2 395 027 B1**

(12) **EUROPEAN PATENT SPECIFICATION**

(45) Date of publication and mention of the grant of the patent:
**11.02.2015 Bulletin 2015/07**

(51) Int Cl.:
**C08B 15/04** (2006.01)          **B32B 5/02** (2006.01)
**D21H 11/16** (2006.01)

(21) Application number: **09839722.7**

(22) Date of filing: **25.12.2009**

(86) International application number:
**PCT/JP2009/071894**

(87) International publication number:
**WO 2010/089948 (12.08.2010 Gazette 2010/32)**

(54) **SUSPENSION OF CELLULOSE FIBERS AND METHOD FOR PRODUCING SAME**

SUSPENSION VON CELLULOSEFASERN UND HERSTELLUNGSVERFAHREN DAFÜR

SUSPENSION DE FIBRES DE CELLULOSE ET SON PROCÉDÉ DE PRODUCTION

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **06.02.2009 JP 2009025916**
**24.12.2009 JP 2009291858**

(43) Date of publication of application:
**14.12.2011 Bulletin 2011/50**

(73) Proprietors:
• **Kao Corporation**
**Chuo-ku**
**Tokyo 103-8210 (JP)**
• **The University of Tokyo**
**Bunkyo-ku,**
**Tokyo 113-8654 (JP)**

(72) Inventors:
• **MUKAI, Kenta**
**Haga-gun**
**Tochigi 321-3497 (JP)**
• **KUMAMOTO, Yoshiaki**
**Haga-gun**
**Tochigi 321-3497 (JP)**
• **ISOGAI, Akira**
**Tokyo 113-8654 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 371 893**          **WO-A1-2007/088974**
**WO-A1-2009/020239**      **IE-A1- 20 070 525**
**JP-A- 2001 262 069**        **JP-A- 2005 060 680**
**JP-A- 2008 001 728**        **JP-A- 2008 242 154**
**JP-A- 2010 037 348**        **JP-T- 2000 503 703**
**JP-T- 2001 509 199**

• **SAITO T ET AL: "Ion-exchange behavior of carboxylate groups in fibrous cellulose oxidized by the TEMPO-mediated system", CARBOHYDRATE POLYMERS, APPLIED SCIENCE PUBLISHERS, LTD. BARKING, GB, vol. 61, no. 2, 4 August 2005 (2005-08-04), pages 183-190, XP027721675, ISSN: 0144-8617 [retrieved on 2005-08-04]**
• **FUKUZUMI H ET AL: "Transparent and High Gas Barrier Films of Cellulose Nanofibers Prepared by TEMPO-Mediated Oxidation", BIOMACROMOLECULES, AMERICAN CHEMICAL SOCIETY, US, vol. 10, 1 January 2009 (2009-01-01), pages 162-165, XP003026931, ISSN: 1525-7797, DOI: 10.1021/BM801065U [retrieved on 2008-12-04]**

**Description**

Field of the invention

The present invention relates to a suspension of cellulose fibers suitably used for producing a gas barrier film for controlling permeation of various gases such as oxygen, water vapor, carbon dioxide, nitrogen, and limonene, a method for producing the same, and a molded article using the same.

Background of the invention

Current materials for gas barrier, such as for shielding oxygen and vapor, are produced mainly from fossil resources. These are thus non-biodegradable, and have to be incinerated after use. Therefore, materials for oxygen barrier that are biodegradable and produced from reproducible biomass have been studied.

JP-A 2002-348522 relates to a coating agent containing microcrystalline cellulose and a layered material produced by applying the coating agent on a substrate. The patent describes that microcrystalline cellulose powder as a raw material preferably has an average particle diameter of 100 μm or less, and that cellulose powders having only average particle diameters of 3 μm and 100 μm were used in Examples.

JP-A 2008-1728 relates to fine cellulose fibers. The patent describes an ability of the fiber to be used as a coating material.

Carbohydrate Polymers 61 (2005) 183-190 reports that a specific cellulose fiber has a cation-exchange ability, and that a sheet produced from cellulose fibers having been cation-exchanged with a polyvalent metal ion has an increased wet strength.

EP 2 371 893 A1 relates to a suspension of cellulose fibers containing cellulose fibers, a polyvalent metal and a volatile base, wherein the cellulose fibers have an average fiber diameter of not more than 200 nm and the content of carboxyl groups of cellulose composing the cellulose fibers of 0.1 to 2 mmol/g. The suspension is said to be a good material for a film having oxygen gas barrier properties.

Biomacromolecules, Vol. 10, No. 1, 2009, 162-165 relates to transparent and high gas barrier films of cellulose nanofibers prepared by TEMPO-mediated oxidation. The films prepared from TEMPO-oxidized cellulose nanofibers (TOCN) are shown to consist of randomly assembled cellulose nanofibers, to be flexible and to have extremely low coefficients of thermal expansion caused by high crystallinity of TOCN. Moreover, the oxygen permeability of a polylactic acid (PLA) film is shown to be drastically decreased to about 1/750 by forming a thin TOCN layer on the PLA film.

Summary of the invention

The present invention provides the following (1), (4), (6), and (7).

(1) A suspension of cellulose fibers, containing a cellulose fiber,

wherein the cellulose fiber contains a cellulose fiber having an average fiber diameter of not more than 200 nm, the content of carboxyl groups in cellulose composing the cellulose fibers is 0.1 to 2 mmol/g, and a metal selected from a polyvalent metal and a monovalent metal is contained in the cellulose fiber to form a counter ion for the carboxyl group, provided that the counter ion of sodium only is excluded,

wherein the metal substitution rate of the counter ion for the carboxyl group contained in the cellulose fibers to the polyvalent metal or the monovalent metal (excluding sodium) is 10% or more, as defined by the following formula:

$$\text{metal substitution rate (\%)} = (\text{metal element content (\%)} / \text{atomic weight} \times 10 \times \text{valency}) / \text{content of carboxyl group in cellulose fibers} \times 100.$$

(4) A method for producing the above shown suspension of cellulose fibers, including:

  cation-exchanging the counter ion of the carboxyl group of the cellulose fibers with a polyvalent metal cation by mixing the cellulose fibers with a water-soluble polyvalent metal salt of the polyvalent metal cation to produce cellulose fibers having the polyvalent metal cation;

  or

  cation-exchanging the carboxyl group of the cellulose fibers with a monovalent metal cation of a monovalent metal salt by mixing the cellulose fibers with a water-soluble monovalent metal salt of the monovalent metal cation (excluding a sodium salt) to produce cellulose fibers having the monovalent metal cation (excluding single sodium);

and
washing the solid cation-exchanged cellulose fibers with water;
adding ion-exchanged water to the filtered solid; and
mechanically treating the mixture to produce the suspension of cellulose fibers.
(6) A film formed from the above shown suspension of cellulose fibers.
(7) A molded composite containing a substrate and a layer of cellulose fibers formed from the above shown suspension of cellulose fibers on the substrate.

Detailed description of the invention

In JP-A-2002-348522, there is no description about an existing metal as a counter ion for a carboxyl group. The patent has room for improvement in film strength, water resistance, and adhesion to the substrate of the coating agent layer applied.

In JP-A-2008-1728, there is no description about an application with specific effects as a coating material.

Bio MACROMOLECULES Volume 7, Number 6, 2006, June, published by the American Chemical Society, does not at all describe gas barrier property such as oxygen barrier.

Carbohydrate Polymers 61 (2005) 183-190 does not at all describe mechanical treatments, applications as a coating agent, or gas barrier properties.

The present invention provides the suspension of cellulose fibers suitably used for producing a molded article having good oxygen barrier properties or water vapor barrier properties, and the method for producing the same.

The present invention also provides the film and the molded composite, which have good oxygen barrier properties or water vapor barrier properties and are produced using the suspension of cellulose fibers.

As used herein, the "gas barrier" refers a function of shielding various gases such as oxygen, nitrogen, carbon dioxide, organic vapor, and water vapor, and/or aroma substances such as limonene and menthol.

The gas barrier material in the present invention may be intended to increase barrier properties against all of the gases, or may against only a certain gas. For example, a gas barrier material having decreased oxygen barrier properties but increased water vapor barrier properties selectively prevents permeation of water vapor, which is also included in the present invention. A gas to which a gas barrier material has increased barrier properties is appropriately selected according to an intended use.

The suspension of cellulose fibers of the present invention is suitably used for producing a film having gas barrier properties against oxygen gas, water vapor, and the like. The film produced from the suspension has high barrier properties against either or both oxygen and water vapor.

The present invention provides the following preferred aspects (2), (3), (5), and (8).

(2) The suspension of cellulose fibers according to the above (1), wherein the polyvalent metal composing the counter ion is selected from cobalt, magnesium, calcium, aluminum, zinc, copper and iron.

(3) The suspension of cellulose fibers according to the above (1), wherein the monovalent metal composing the counter ion is selected from silver and potassium.

(5) The method according to the above (4), wherein, in the step of cation-exchanging, the metal substitution rate of the counter ion for the carboxyl group contained in the cellulose fibers to the polyvalent metal or the monovalent metal (excluding sodium) is 10% or more, as defined by the following formula:

$$\text{metal substitution rate (\%)} = (\text{metal element content (\%)} / \text{atomic weight} \times 10 \times \text{valency}) / \text{content of carboxyl group in cellulose fibers} \times 100.$$

(8) The counter ion for the carboxyl group is composed of one or two or more of metals selected from polyvalent and monovalent metals, provided that the counter ion of sodium only is excluded.

The polyvalent or monovalent metal composing the counter ion is preferably selected from cobalt, magnesium, calcium, aluminum and silver.

<Suspension of cellulose fibers and method for producing the same>

[Preparation of specific cellulose fibers]

The cellulose fibers used in the present invention have an average fiber diameter of not more than 200 nm, preferably 1 to 200 nm, more preferably 1 to 100 nm, and even more preferably 1 to 50 nm. The average fiber diameter can be measured by the method described in Examples.

From the viewpoint of achieving high gas barrier properties, a content of carboxyl groups in the cellulose composing the cellulose fiber used in the present invention is 0.1 to 2 mmol/g, preferably 0.4 to 2 mmol/g, more preferably 0.6 to 1.8 mmol/g, and even more preferably 0.6 to 1.6 mmol/g. The content of carboxyl groups can be measured by the method described in Examples.

In the cellulose fibers used in the present invention, the content of carboxyl groups in the cellulose composing the cellulose fiber is within the range described above. Depending on conditions such as oxidizing treatment in a practical production process, some cellulose fibers being out of the above specified ranges of the content of carboxyl groups may be contained in the produced cellulose fibers as impurities after the oxidizing treatment.

The cellulose fibers used in the present invention can be produced, for example, by the following method. First, to natural fibers as a raw material, about 10 to 1000 times amount by mass (based on dry mass) of water is added, and the mixture is processed with a mixer or the like to obtain a slurry.

Examples of the natural fiber include wood pulps, nonwood pulps, cotton, bacterial celluloses, and the like.

Next, the natural fibers are subjected to an oxidizing treatment using 2,2,6,6-tetramethyl-1-piperidine-N-oxyl (TEMPO) as a catalyst. Other catalysts including derivatives of TEMPO such as 4-acetamide-TEMPO, 4-carboxy-TEMPO, and 4-phosphonoxy-TEMPO can also be used.

An amount of TEMPO to be used is within the range from 0.1 to 10% by mass to the natural fibers to be used as a raw material (based on dry mass).

In the oxidizing treatment, an oxidant such as sodium hypochlorite and a cooxidant such as bromides such as sodium bromide are used together with TEMPO.

Examples of the oxidant that can be used include hypohalous acids and salts thereof, halous acids and salts thereof, perhalic acids and salts thereof, hydrogen peroxide, organic peracids, and the like. Preferred are alkaline metal hypohalites such as sodium hypochlorite and sodium hypobromite . An amount of the oxidant to be used is within the range from about 1 to 100% by mass to the natural fibers to be used as a raw material (based on dry mass).

For the cooxidant, alkaline metal bromides such as sodium bromide are preferably used. An amount of the cooxidant to be used is within the range from about 1 to 30% by mass to the natural fibers to be used as a raw material (based on dry mass).

A pH of the slurry is preferably kept within the range from 9 to 12 for effectively progressing oxidation.

A temperature of the oxidizing treatment (temperature of the slurry described above) is arbitrarily set in the range from 1 to 50°C. The oxidizing treatment can progress at room temperature and does not require specific temperature control. A time of the oxidizing treatment is desirably 1 to 240 minutes.

After the oxidizing treatment, the used catalyst and the like are removed by washing with water or the like. Oxidized cellulose fibers can be prepared in the form of fiber or powder, which are dried according to need.

[Cation-exchange of cellulose fibers]

The oxidized cellulose fiber has a carboxyl group introduced by the oxidizing reaction and a sodium ion as a counter ion.

The above shown oxidized cellulose fibers are dispersed in a dispersion medium containing water and a water-soluble polyvalent metal salt or a monovalent metal salt (excluding a sodium salt) is added to the dispersion and, while stirring the mixture, the cation-exchange is conducted.

Any polyvalent or monovalent metal salt (excluding a sodium salt) can arbitrarily be selected as long as it is possible to cation-exchange the metal ion thereof with the sodium ion of the carboxyl group in the cellulose fibers. Example of the polyvalent or monovalent metal salt include chlorides and organic acid salts such as sulfates, nitrates, carbonates and acetates of magnesium, calcium, aluminum, cobalt, zinc, barium, nickel, copper, iron, cadmium, lead, lanthanum, silver, and potassium, and the like. From the viewpoint particularly of gas barrier properties of a molded article prepared later, preferred are magnesium chloride, cobalt chloride, and silver nitrate.

After stirring for a given period of time, the oxidized cellulose fibers are washed with ion-exchanged water or the like. In this stage, the cellulose fibers are not yet pulverized and can be repeatedly subjected to a treatment of washing with water and filtering.

The washing treatment removes the remaining polyvalent metal salt or monovalent metal salt (excluding a sodium salt) and a bi-product generated by the cation-exchange. Cation-exchanged cellulose fibers in the wet state or the dry powder state are then prepared.

In the cation-exchanged cellulose fibers, the polyvalent metal salt or monovalent metal salt that does not cation-exchange with the carboxyl group in the cellulose fibers, which remains before washing, are removed by the washing treatment.

Not all of the carboxyl groups in the cation-exchanged cellulose fibers must be accompanied with polyvalent or monovalent metal (excluding sodium) by cation-exchange. It is permitted that a small amount of carboxyl groups having sodium as a counter ion remains as long as the problems of the present invention can be solved. In cases of remaining carboxyl groups accompanied with sodium as a counter ion, the counter ion of the carboxyl group is a combination of sodium with a polyvalent metal or a combination of sodium with a monovalent metal excluding sodium.

However, the higher rate of cation-exchange (metal substitution rate is measured by the method described in Examples) of the carboxyl groups in the cation-exchanged cellulose fibers with a polyvalent metal or a monovalent metal (excluding sodium) preferably results in the higher gas barrier properties. The metal substitution rate is preferably 100%. From the viewpoints of reducing workloads in washing (the number of times washing, a period for washing, an amount of water required for washing, and the like) for reduction in production cost and energy conservation while keeping the gas barrier properties at high level, the metal substitution rate is 10% or more, preferably 30% or more, and more preferably 80% or more.

The metal substitution rate can be qualified or quantified by elementary analysis such as inductively coupled plasma atomic emission spectroscopy (ICP-AES) and X-ray fluorescence spectrometry.

[Mechanical treatment of cation-exchanged cellulose fibers]

Then, the intermediate material is dispersed in a medium such as water, and pulverized to a desired fiber width and length with a defibrator, a beater, a low-pressure homogenizer, a high-pressure homogenizer, a grinder, a cutter mill, a ball mill, a jet mill, a single screw extruder, a twin screw extruder, an ultrasonic agitator, or a home juicer-mixer. In this step, the solid content of the dispersion is preferably 50% by mass or less. The dispersion with higher solid content than 50% by mass requires high energy for dispersing, which is unfavorable.

Such a pulverizing treatment produces cellulose fibers having an average fiber diameter of not more than 200 nm.

Then, the treated cellulose fibers can be obtained in the form of a suspension having an adjusted solid content, or in the form of a powder (powdery aggregates of cellulose fibers, not cellulose particles) dried according to need. When the suspension is produced, it may be produced using only water or a mixed solvent of water with other organic solvent (e.g., an alcohol such as ethanol), a surfactant, an acid, a base, and the like.

These oxidizing, cation-exchanging, and pulverizing treatments convert a hydroxy group at C6-position of a cellulose-constituting unit to a carboxyl group via an aldehyde group by selective oxidation to produce high crystalline cellulose fibers having a polyvalent metal or a monovalent metal (excluding sodium) as a counter ion for the carboxyl group, a content of carboxyl groups from 0.1 to 2 mmol/g, and an average fiber diameter of not more than 200 nm.

The high crystalline cellulose fibers have Type I crystal structure of cellulose. This means that the cellulose fibers are produced by surface oxidation and pulverization of a solid material of natural cellulose having Type I crystal structure. That is, natural cellulose fibers have a higher ordered solid structure through formation of many bundles of fine fibers, called microfibrils, produced in a biosynthesis process of the natural cellulose fibers. In the present invention, strong cohesion force (hydrogen bonding between surfaces) among microfibrils is reduced by introducing aldehyde or carboxyl group and then fine cellulose fibers are obtained by pulverization.

The content of carboxyl groups can be increased or decreased within a given range by adjusting the oxidizing treatment conditions, changing polarity of the cellulose fiber. An average fiber diameter, an average fiber length, an average aspect ratio, and the like of the cellulose fibers can be controlled by thus controlling electrostatic repulsion of carboxyl groups and pulverizing conditions.

It is thought that in a film formed from the suspension of the cellulose fibers produced by the oxidizing, cation-exchanging, and pulverizing treatments, fine cellulose fibers may strongly interact with each other to form hydrogen bonds and/or crosslink, thereby preventing gas dissolution and diffusion, and the film may thus exhibit gas barrier properties such as high oxygen barrier properties. In addition, since a size and a distribution of pores among cellulose fibers of a molded article can be varied (in other words, effects of molecular sieving can be varied) according to a width and a length of cellulose fibers, the gas barrier can be expected to have molecular selective barrier properties.

In the suspension of the cellulose fibers or the film formed therefrom, the counter ion of the carboxyl group is substituted with a polyvalent metal or a monovalent metal (excluding sodium). The suspension or the film thus can be expected to have properties such as water-resistant, moisture-resistant, and antibiotic properties according to the selection of counter ion.

The suspension of cellulose fibers of the present invention is a white slurry or a transparent gel, which is suitable in painting. In this case, the suspension may contain water with an organic solvent according to need. From the viewpoint of coating property in painting, the suspension of cellulose fibers of the present invention preferably has a viscosity of 10 to 5000 mPa·s, and more preferably 30 to 1000 mPa·s as measured by the method described in Examples (at 23°C) .

The suspension of cellulose fibers of the present invention has a lower viscosity than that of a suspension of cellulose fibers not cation-exchanged. The suspension of the present invention thus retains its fluidity at a higher concentration, and can be used, in painting, in a wide range of concentration. From the viewpoint of coating property in painting, the suspension of cellulose fibers of the present invention preferably has a concentration of 0.5 to 50% by mass, and more preferably 0.8 to 10% by mass.

The suspension of cellulose fibers of the present invention has gas barrier properties such as oxygen barrier and water vapor barrier properties in the form of film. The suspension thus can be used as a film-forming material to produce film and the like, or applied to the surface of a planar or tridimensional molded article by a known method such as coating, spraying or immersing to modify the surface (i.e., imparting gas barrier properties, moisture resistant properties and the like).

The suspension of cellulose fibers of the present invention can further contain additives such as a UV absorber and a colorant according to need.

[Method for producing a molded article]

Next, embodiments of producing a film and a molded composite using the suspension of cellulose fibers of the present invention are described.

<Film article>

The film of the present invention can be formed from the suspension of cellulose fibers by the method described below.

In a first step, the suspension of cellulose fibers is applied to a substrate to form a film intermediate.

Specifically, the suspension of cellulose fibers is cast on (or applied to, sprayed to, or used as immersion fluid for) the hard surface of the substrate such as glass and metal, and dried to form the film. In this method, by controlling a content of carboxyl groups and an aspect ratio of cellulose fibers in the suspension of cellulose fibers and a thickness of the film, the film article can be obtained, having properties according to design (high barrier properties, transparency, etc.)

The film can further be heated for 1 to 200 minutes at 50 to 250°C to produce a treated film, according to need. The film is only required to be dried to the extent that it can be peeled off from the substrate. When the heat treatment is performed, the film may be heated as is on the substrate.

In the film thus produced using the cation-exchanged cellulose fibers, the cellulose fibers form a carboxylate with a metal other than sodium. The film has good water resistant, and gas barrier properties under high humidity environment.

Some metal species in the film are expected to impart increased heat resistance and/or antibiotic properties to the film. In addition, the metal ion in the cellulose fibers can be reduced to obtain a metal particle, which can be used as a catalyst.

The suspension of the cellulose fibers used to form the film has been subjected to the washing treatment, and metal salts that does not exchange cations and sodium salts generated as bi-products have been washed out. The film prepared through drying the suspension of the cellulose fibers thus does not contain an inorganic salt of a polyvalent or monovalent metal other than that binding to the cellulose fibers.

The presence or absence of an inorganic salt of a polyvalent or monovalent metal and a cation substitution rate of the film can be determined by methods such as X-ray fluorescence analysis, X-ray diffractometry, and infrared absorption spectrometry.

The film of the present invention has moisture resistant properties (in strength and barrier properties), and can be used for, in addition to gas barrier materials, separation membranes for water purification, separation membranes for alcohol, polarizing films, polarizer protection films, flexible transparent substrates for display, separators for fuel cell, condensation-preventing sheets, antireflection sheets, UV shield sheets, infrared shield sheets, and the like.

<Molded composite>

The molded composite of the present invention contains a substrate and a layer of cellulose fibers, and can be produced by the following method of production.

In a first step, the suspension containing cellulose fibers is applied (by coating, spraying, immersing, casting or the like) to the surface of a substrate, and dried to obtain a molded composite having a layer of the cellulose fibers on the substrate (at either or each side).

A method of layering and adhering the film previously prepared as described above to a substrate is also applicable. For adhering, known methods such as a method using an adhesive and a method of thermal bonding can be used.

The product can further be subjected to a heat treatment for 1 to 200 minutes at 50 to 250°C to obtain a molded composite containing the substrate and the layer of cellulose fiber.

In the molded composite thus produced, cellulose fibers form a carboxylate with a metal other than sodium. The molded composite has good water resistant properties, and gas barrier properties under high humidity environment.

The suspension of the cellulose fibers used to produce the molded composite has been subjected to the washing treatment, and metal salts that does not exchange cations and sodium salts generated as bi-products have been washed out. The molded composite, produced through drying the suspension of the cellulose fibers, thus does not contain any other inorganic salt of a polyvalent or monovalent metal than that those bound to the cellulose fibers.

A cation substitution rate with a polyvalent or monovalent metal and the presence or absence of an inorganic salt in the molded composite can be determined by methods such as X-ray fluorescence analysis, X-ray diffractometry, and infrared absorption spectrometry.

A thickness of the layer of cellulose fibers of the molded composite can be arbitrarily set according to an intended use. From the viewpoint of gas barrier properties, the thickness is preferably 20 to 900 nm, more preferably 50 to 700 nm, and even more preferably 100 to 500 nm.

For the molded substrate, those can be used, including thin layer articles having desired shape and size such as film, sheet, woven fabric, and nonwoven fabric, tridimensional containers of various shapes and sizes such as boxes and bottles, and the like. These molded substrates can be of paper, paperboard, plastic, metal (those having many pores or in the form of woven metal mainly used for reinforcing), or composite material thereof. Among these materials, preferably used are plant-derived materials such as paper and paperboard, biodegradable materials such as biodegradable plastics, and biomass-derived materials. The molded substrate may have a multi-layer structure of a single material or different materials (e.g., composed of adhesives and wetting-increasing agents).

A material of the plastic substrate can be appropriately selected according to an intended use Examples of the material include polyolefins such as polyethylene and polypropylene, polyamides such as nylons 6, 66, 6/10, and 6/12, polyesters such as poly(ethylene terephthalate) (PET), poly(butylene terephthalate), aliphatic polyesters, polylactic acid (PLA), polycaprolactone, and polybutylene succinate, cellophanes such as cellulose, triacetic acid cellulose (TAC) and the like. These plastics may be used alone or in combination.

A thickness of the molded substrate is not specifically limited, and appropriately selected so as to give a strength suitable for an intended use. For example, the thickness is within the range of 1 to 1000 $\mu$m.

The molded composite of the present invention has moisture resistant properties (in strength and barrier properties), and can be used for, in addition to gas barrier materials, separation membranes for water purification, separation membranes for alcohol, polarizing films, polarizer protection films, flexible transparent substrates for display, separators for fuel cell, condensation-preventing sheets, antireflection sheets, UV shield sheets, infrared shield sheets, and the like.

Examples

The following Examples demonstrate the present invention. Examples are intended to illustrate the present invention and not to limit the present invention.

Cellulose fibers are determined below in view of properties thereof.

(1) Average fiber diameter of cellulose fibers

For an average fiber diameter of cellulose fibers, the suspension diluted to a concentration of 0.0001% by mass was dropped on mica and dried to obtain an observation sample. The observation sample was measured for fiber height with an atomic force microscope (Nanoscope III Tapping mode AFM, Digital Instruments, with a probe PointProbe (NCH) available from Nanosensors). In an image showing recognizable cellulose fibers, five or more fibers were selected and used to determine the average fiber diameter from heights thereof.

(2) Content of carboxyl groups in cellulose fibers (mmol/g)

In a 100 ml beaker, to 0.5 g by absolute dry weight of cation-exchanged oxidized cellulose fibers, ion-exchanged water was added so that the total volume was 55 ml, followed by 5 ml of aqueous 0.01M sodium chloride to obtain a pulp suspension. The pulp suspension was stirred with a stirrer until pulp was well dispersed. To this, 0. 1M hydrochloric acid was added to adjust a pH to 2.5 to 3.0. The suspension was subjected to titration by injecting 0.05 M aqueous solution of sodium hydroxide at a waiting time of 60 seconds with an automated titrator (AUT-501, DKK-Toa Corporation). A conductivity and a pH of the pulp suspension were repeatedly measured every one minute until a pH of the suspension reached around 11. The resultant conductivity curve was used to determine a sodium hydroxide titer and calculate a content of carboxyl groups.

A natural cellulose fiber presents as a bundle of high crystalline microfibrils formed by aggregation of about 20 to 1500 cellulose molecules. TEMPO oxidization used in the present invention enables a selective introduction of a carboxyl group to the surface of the crystalline microfibril. In practical, a carboxyl group was introduced only to the surface of cellulose crystal, but the content of carboxyl groups defined by the method of measurement above represents an average value per weight of cellulose.

(3) Viscosity (mPa·s)

Using a type E viscometer (Visconic, Tokyo Keiki Inc.), a suspension of 1% by mass of cellulose fibers was measured for viscosity at 23°C at 2.5 rpm.

(4) Oxygen permeability (Equal Pressure Method) ($cm^3/m^2 \cdot day \cdot Pa$)

An oxygen permeability was measured under conditions of 23°C and 50%RH with an oxygen permeability tester OX-TRAN2/21 (model ML&SL, MOCON, Inc.) in accordance with the method of JIS K7126-2, Appendix A, and more specifically, in an atmosphere of oxygen gas of 23°C and 50% RH and nitrogen gas (carrier gas) of 23°C and a humidity of 50%.

(5) Water vapor permeability ($g/m^2 \cdot day$)

The water vapor permeability was measured by a cup method under conditions of 40°C and 90% RH in accordance with JIS Z0208.

(6) Metal substitution rate (%)

A content of Mg element in cellulose fibers was measured with ICP-AES (Seiko Instruments Inc., SPS-3000) (Examples 4 to 7) .

A Mg standard solution (Wako Pure Chemical Industries, Ltd.) was used to prepare 0, 0.1, 1.5, 10, 20, 30 mg/L standard solutions. These standard solutions were prepared such that 100 mL of a standard solution contained 1 mL of sulfuric acid and 5 mL of 1M sulfuric acid. These standard solutions were used to obtain a standard curve of Mg.

The suspension of the cellulose fibers was freeze-dried, and 0.1 g of sample was precisely weighed out therefrom. To the sample, 1 mL of sulfuric acid was added. A mixture was heated on a hot-plate. To the mixture, nitric acid was slowly added. The operation was repeated until a transparent solution was prepared. The resultant transparent solution was allowed to cool to a room temperature, and re-dissolved in 5mL of 1N nitric acid. The solution was quantitatively transferred to a 100 mL measuring flask. The flask was filled up to the defined volume of 100mL with ultrapure water. The solution thus prepared was used as a measurement sample. A Mg content (%) measured by ICP-AES analysis was used to calculate a metal substitution rate by the following formula:

$$\text{Metal substitution rate (\%) = (Mg content / Mg atomic weight} \times 10 \times \text{Mg valency) / content of carboxyl group in cellulose fibers} \times 100$$

wherein, Mg atomic weight is 24, and Mg valency is 2. For the content of carboxyl group in cellulose fibers (mmol/g), a value measured by the method (described in (2) Content of carboxyl groups in cellulose fibers (mmol/g)) is used.

(7) Light transmittance

Using a spectrophotometer (UV-2550, Shimadzu Corporation), a suspension of 0.1% by mass concentration prepared with ion-exchanged water was measured for light transmittance (%) at a wavelength of 660 nm with an optical path length of 1 cm. From the viewpoint of transparency of a molded article prepared later, a suspension of 1% by mass solid content preferably has a light transmittance of 0.5% or more, more preferably 40% or more, and even more preferably 60% or more.

Example 1

[Preparation of a suspension of the cellulose fibers]

(1) Starting material, catalyst, oxidant, and cooxidant Natural fiber: bleached softwood kraft pulp (Fletcher Challenge Canada Ltd., trade name: Machenzie, CSF 650 ml)
TEMPO: commercial product (ALDRICH, Free radical, 98%)
Sodium hypochlorite: commercial product (Wako Pure Chemical Industries, Ltd., C1: 5%)
Sodium bromide: commercial product (Wako Pure Chemical Industries, Ltd.)
Magnesium chloride: commercial product (Wako Pure Chemical Industries, Ltd.)
Cobalt chloride: commercial product (Wako Pure Chemical Industries, Ltd.)
0.05M Silver nitrate: commercial product (Wako Pure Chemical Industries, Ltd.)
(2) Procedure of Preparation

<Oxidation of cellulose fibers>

3 g of the bleached softwood kraft pulp was sufficiently stirred in 297 g of ion-exchanged water. To this, per 3 g by mass of the pulp, 1.25% by mass of TEMPO, 12.5% by mass of sodium bromide, and 28.4% by mass of sodium hypochlorite were added in this order. The pulp was oxidized for 120 minutes at 20°C while keeping the pH at 10.5 by dropping 0.5M sodium hydroxide using a pH-stat.
After the end of dropping, the resultant oxidized pulp was sufficiently washed with ion-exchanged water. To 3 g of the oxidized pulp, 597 g of ion-exchanged water was added to prepare a suspension of the oxidized cellulose fibers having a solid content of 0.5% by mass.

<Cation-exchange and mechanical treatment of oxidized cellulose fibers>

To the prepared suspension of the oxidized cellulose fibers , 9 g of aqueous solution of 10% by mass magnesium chloride was added. A mixture was gently stirred for 60 minutes.
Then, cellulose fibers were sufficiently washed with ion-exchanged water to obtain cation-exchanged cellulose fibers. 3 g of the cation-exchanged cellulose fibers and 297 g of ion-exchanged water were mixed for 10 minutes with a mixer (Vita-Mix-Blender ABSOLUTE, Osaka Chemical Co.,Ltd.) for pulverizing fibers to obtain a suspension of cellulose fibers. The suspension of cellulose fibers had a solid content of 1.0% by mass. In Example 1, magnesium (Mg) is present as the counter ion of the carboxyl group. Table 1 shows an amount of carboxyl groups, an average fiber diameter, and a viscosity.

[Preparation of molded composite]

The suspension of cellulose fibers was applied on a side of a poly(ethylene terephthalate) (PET) sheet (trade name: Lumirror, Toray Industries Inc., sheet thickness: 25 μm) with a bar coater (#50) and dried for 120 minutes or more at an ambient temperature (23°C).
The resultant molded composite was measured for oxygen permeability and water vapor permeability. The molded composite was further hold for 30 minutes in a thermostat chamber set to a heating temperature and allowed to cool for 2 hours or more at an ambient temperature (23°C) to obtain a treated molded composite. Measured values of oxygen permeability and water vapor permeability are shown in Table 1.
In Table 1, the thickness of the layer of cellulose fibers was calculated from the thickness of the wet film and the solid content of the suspension of the cellulose fibers, assuming that the specific gravity of cellulose fibers was 1.5. The value met exactly the film thickness measured with an atomic force microscope.

Example 2

A suspension of cellulose fibers was prepared as in Example 1, except that 6 g of aqueous solution of 10% cobalt chloride was added as a metal salt. A molded composite was also similarly prepared as in Example 1. In Example 2, cobalt (Co) is present as the counter ion of the carboxyl group. Measured values of oxygen permeability and water vapor permeability are shown in Table 1.

Example 3

A suspension of cellulose fibers was prepared as in Example 1, except that 90 g of aqueous solution of 0.05M silver nitrate was added as a metal salt. A molded composite was also prepared as in Example 1. In Example 3, silver (Ag) is present as the counter ion of the carboxyl group. Measured values of oxygen permeability and water vapor permeability are shown in Table 1.

Comparative Example 1

Comparative Example 1 is for cellulose fibers not cation-exchanged. First, 3 g of the bleached softwood kraft pulp was sufficiently stirred in 297 g of ion-exchanged water. To this, per 3 g by mass of the pulp, 1.25% by mass of TEMPO, 12.5% by mass of sodium bromide, and 28.4% by mass of sodium hypochlorite were added in this order. The pulp was oxidized for 120 minutes at 20°C while keeping the pH at 10.5 by dropping 0.5M sodium hydroxide using a pH-stat.

After the end of dropping, the resultant oxidized pulp was sufficiently washed with ion-exchanged water. 3 g of the oxidized cellulose fibers and 297 g of ion-exchanged water were mixed for 10 minutes with a mixer (Vita-Mix-Blender ABSOLUTE, Osaka Chemical Co.,Ltd.) to obtain a suspension of cellulose fibers. The suspension of cellulose fibers had a solid content of 1.0% by mass. In Comparative Example 1, sodium (Na) is present as the counter ion of the carboxyl group. Measured values of oxygen permeability and water vapor permeability are shown in Table 1.

A molded composite was similarly prepared as in Example 1. Measured values of oxygen permeability and water vapor permeability are shown in Table 1.

Comparative Example 2

A PET sheet alone (sheet thickness: 7 $\mu$m) used as the substrate sheet was measured for oxygen permeability and water vapor permeability. Results are shown in Table 1.

From the comparison of Examples 1 to 3 to Comparative Example 1, it can be seen that films of Examples 1

Table 1

| | | Comparative example 1 | | Comparative example 2 | Example 1 | | Example 2 | | Example 3 | |
|---|---|---|---|---|---|---|---|---|---|---|
| | Substrate (thickness 25 μm) | PET | | PET | PET | | PET | | PET | |
| Cellulose fibers | Counter ion | Na | | – | Mg | | Co | | Ag | |
| | amount of carboxyl groups (mmol/g) | 1.2 | | – | 1.2 | | 1.2 | | 1.2 | |
| | Average fiber diameter (nm) | 3.3 | | – | 9.5 | | 10.4 | | 4.9 | |
| | Viscosity (mPa·s) | 3226 | | – | 1587 | | 1536 | | 1024 | |
| Molded composite | Heating temperature (°C) ※1 | – | 150 | – | – | 150 | – | 150 | – | 150 |
| | Thickness of cellulose fibers (nm) | 700 | | – | 700 | | 700 | | 700 | |
| | Oxygen permeability ($\times 10^{-5} cm^3 / m^2 \cdot day \cdot Pa$) | 31.7 | 6.9 | 50.5 | 26.1 | 3.4 | 21.6 | 2.0 | 31.8 | 6.2 |
| | Water vapor permeability (g/m²·day) | 24.1 | 24.4 | 25.2 | 22.3 | 23.5 | 22.9 | 22.8 | 23.6 | 24.1 |

※1 – means drying at an ambient temperature (23°C) without heating.

EP 2 395 027 B1

11

to 3 including a cation-exchanging operation had increased oxygen barrier and water vapor barrier properties at 50% RH. The reason of higher oxygen barrier properties of Examples 1 to 3 although larger average fiber diameters thereof than that of Comparative Example 1 is thought that a layer of cation-exchanged cellulose fibers can maintain a compact structure even after absorption of moisture. This effect may be caused by reduction of moisture absorption power of cellulose fibers due to substitution of a counter ion for a carboxyl group to a metal other than sodium. Moisture absorption of cellulose fibers is mainly derived from hydroxy and carboxyl groups.

From the comparison among Examples 1 to 3, it can be seen that Examples 1 and 2 using a divalent metal as the counter ion showed higher oxygen barrier and water vapor barrier properties than Example 3 using a monovalent metal as the counter ion. The reason is thought that the divalent metal ion cross-links carboxyl groups between cellulose fibers to increase stability of the structure of cellulose fibers against moisture, resulting in higher gas barrier properties.

Example 4

To 3 g of the oxidized pulp prepared as in Example 1, 597 g of ion-exchanged water was added to prepare a suspension of the oxidized cellulose fibers having a solid content of 0.5% by mass. To the suspension, 3.5 g of aqueous solution of 10% by mass magnesium chloride was added. A mixture was gently stirred for 60 minutes. The amount of magnesium chloride was 0.5 equivalents of the amount of carboxyl groups in the cellulose fibers.

After the end of stirring, cellulose fibers were sufficiently washed with ion-exchanged water to obtain cation-exchanged cellulose fibers. 3.9 g of the cation-exchanged cellulose fibers and 296.1g of ion-exchanged water were stirred for 120 minutes with a mixer (Vita-Mix-Blender ABSOLUTE, Osaka Chemical Co.,Ltd.) for pulverizing fibers to obtain a suspension of cellulose fibers. The suspension of cellulose fibers had a solid content of 1.3% by mass. Table 2 shows an amount of carboxyl groups, an average fiber diameter, a viscosity, a light transmittance, and a metal substitution rate.

The resultant suspension of cellulose fibers was applied on a side of a poly (ethylene terephthalate) (PET) sheet (trade name: Lumirror, Toray Industries Inc., sheet thickness: 25 $\mu$m) with a bar coater (#50), as in Example 1. It was dried for 120 minutes or more at an ambient temperature (23°C). The product was further hold for 30 minutes in a thermostat chamber set to 150°C and allowed to cool for 2 hours or more at an ambient temperature to obtain a molded composite. Measured values of oxygen permeability and water vapor permeability are shown in Table 2.

Examples 5 to 6

Suspensions of cellulose fibers were prepared as in Example 4, except that amounts of magnesium chloride were added as shown in Table 2. Molded composites were also prepared with these suspensions as in Example 4. Table 2 shows measured values of amount of carboxyl groups, average fiber diameter, viscosity, light transmittance, metal substitution rate, oxygen permeability, and water vapor permeability.

Example 7

To 300 g of the suspension of the cellulose fibers having a solid content of 1. 0% by mass prepared in Comparative Example 1, a metal salt shown in Table 2 in an amount shown in Table 2 was added to cation-exchange. The cation-exchanged cellulose fibers were sufficiently washed on a glass filter and mixed with ion-exchanged water such that a solid content of the mixture was 1.3% by mass. The mixture was stirred for 120 minutes with a mixer (Vita-Mix-Blender ABSOLUTE, Osaka Chemical Co.,Ltd.) to obtain a suspension of cellulose fibers. A molded composite was prepared as in Example1. Measured values of metal substitution rate, oxygen permeability, and water vapor permeability are shown in Table 2.

Examples 8 to 13

Suspension of cellulose fibers was prepared as in Example 4, except that metal salts shown in Table 2 were used in amounts shown in Table 2. Molded composites were also prepared as in Example 4 with these suspensions. Measured values of amount of carboxyl groups, average fiber diameter, viscosity, light transmittance, oxygen permeability, and water vapor permeability are shown in Table 2.

Comparative Example 3

A suspension of cellulose fibers was prepared as in Comparative Example 1, except that the suspension was mixed for 120 minutes with a mixer (Vita-Mix-Blender ABSOLUTE, Osaka Chemical Co.,Ltd.). A molded composite was also prepared as in Comparative Example1 with the suspension. Measured values of oxygen permeability, and water vapor permeability are shown in Table 2.

Table 2

| | | Example | | | | | | | | | | Comparative example |
|---|---|---|---|---|---|---|---|---|---|---|---|---|
| | | 4 | 5 | 6 | 7 | 8 | 9 | 10 | 11 | 12 | 13 | 3 |
| | Substrate (thickness 25 $\mu$ m) | PET | | | | | | | | | | PET |
| Cellulose fiber | Counter ion | Mg | | | | | Ca | | Al | Zn | K | Na |
| | Kind of metal salt | MgCl$_2$ | | | | MgSO$_4$ | CaCl$_2$ | CaSO$_4$ | Al$_2$(SO$_4$)$_3$ | ZnCl$_2$ | KCl | — |
| | Adding amount of metal salt (equivalent) | 0.5 | 1 | 2 | 2 | 2 | 2 | 2 | 2 | 2 | 2 | |
| | Amount of carboxyl group (mmol/g) | 1.2 | | | | | | | | | | 1.2 |
| | Fibrillating (pulverizing) time (min.) | 120 | 120 | 120 | 120 | 120 | 120 | 120 | 120 | 120 | 120 | 120 |
| | Average fiber diameter (nm) | 8.1 | 11.1 | 10.2 | 5.2 | 12.0 | 7.0 | 20.4 | 30.4 | 18.8 | 4.2 | 3.1 |
| | Metal substitution rate of counter ion (%) | 38 | 55 | 100 | 82 | — | — | — | — | — | — | 0 |
| | Light transmittance (%) | 57 | 24 | 9 | 85 | 10 | 2 | 10 | 15 | 7 | 95 | 98 |
| | Viscosity (mPa·s) | 256 | 102 | 31 | 307.2 | 256 | 307 | 307.2 | 102 | 51.2 | 819.2 | 921.6 |
| Molded composite | Heating condition (°C × 分) | 150 × 30 | | | | | | | | | | 150 × 30 |
| | Thickness of cellulose fiber (nm) | 800 | | | | 800 | | | | | | 800 |
| | Oxygen permeability ( × 10$^{-5}$cm$^3$/m$^2$·day·Pa) | 4.1 | 3.5 | 0.5 | 1.5 | 3.1 | 1.8 | 4.6 | 43.4 | 4.7 | 19.3 | 5.4 |
| | Water vapor permeability (g/m$^2$·day) | 22.5 | 22.1 | 20.5 | 21.89 | 22.2 | 23.0 | 22.8 | 23.3 | 22.1 | 23.3 | 24.4 |

EP 2 395 027 B1

Examples 4, 5, 6, and 7 prepared suspensions of cellulose fibers with different metal substitution rates. As clearly shown in Table 2, the higher metal substitution rate a suspension of cellulose fibers had, the higher oxygen barrier and water vapor barrier properties a molded composite prepared therefrom had. Particularly for Example 6, the suspension having a metal substitution rate of 100% produced a molded composite having the highest barrier properties. In Example 7, pulverized cellulose fibers (Comparative Example 1) were cation-exchanged. The cellulose fibers had a lower metal substitution rate than that of cellulose fibers of Example 6 cation-exchanged with the same amount of magnesium chloride. The molded composite prepared in Example 7, however, had improved barrier properties and a high light transmittance.

Comparing in terms of the counter ion, Examples 4 to 8 (Mg), 9 to 10 (Ca), and 12 (Zn), which used divalent metals, exhibited higher oxygen barrier and water vapor barrier properties than that of Comparative Example 3 (Na). Example 13 using a monovalent metal (K) and Example 11 using a trivalent metal (Al) exhibited higher water vapor barrier properties than that of Comparative Example 3 (Na). A kind of counter ion is thought to modify a form of fibers and a state of cross-linking of carboxyl groups, thereby effecting moisture absorption power.

In Table 2, an Example having a total metal substitution rate of counter ions less than100% had sodium as the rest of counter ions.

## Claims

1. A suspension of cellulose fibers, comprising a cellulose fiber,
   wherein the cellulose fiber comprises a cellulose fiber having an average fiber diameter of not more than 200 nm, the content of carboxyl groups in cellulose composing the cellulose fibers is 0.1 to 2 mmol/g, and a metal selected from the group consisting of a polyvalent metal and a monovalent metal is contained in the cellulose fiber to form a counter ion for the carboxyl group, provided that the counter ion of sodium only is excluded,
   wherein the metal substitution rate of the counter ion for the carboxyl group contained in the cellulose fibers to the polyvalent metal or the monovalent metal (excluding sodium) is 10% or more, as defined by the following formula:

$$\text{metal substitution rate (\%)} = (\text{metal element content (\%)} / \text{atomic weight} \times 10 \times \text{valency}) / \text{content of carboxyl group in cellulose fibers} \times 100.$$

2. The suspension of cellulose fibers according to claim 1, wherein the polyvalent metal composing the counter ion is selected from the group consisting of cobalt, magnesium, calcium, aluminum, zinc, copper and iron.

3. The suspension of cellulose fibers according to claim 1, wherein the monovalent metal composing the counter ion is selected from the group consisting of silver and potassium.

4. A method for producing the suspension of cellulose fibers according to claim 1, comprising:

   cation-exchanging the counter ion of the carboxyl group of the cellulose fibers with a polyvalent metal cation by mixing the cellulose fibers with a water-soluble polyvalent metal salt of the polyvalent metal cation to produce cellulose fibers having the polyvalent metal cation;
   or
   cation-exchanging the carboxyl group of the cellulose fibers with a monovalent metal cation of a monovalent metal salt by mixing the cellulose fibers with a water-soluble monovalent metal salt of the monovalent metal cation (excluding a sodium salt) to produce cellulose fibers having the monovalent metal cation (excluding single sodium);
   and
   washing the solid cation-exchanged cellulose fibers with water;
   adding ion-exchanged water to the filtered solid; and
   mechanically treating the mixture to produce the suspension of cellulose fibers.

5. The method according to claim 4, wherein, in the step of cation-exchanging, the metal substitution rate of the counter ion for the carboxyl group contained in the cellulose fibers to the polyvalent metal or the monovalent metal (excluding sodium) is 10% or more, as defined by the following formula:

$$\text{metal substitution rate (\%)} = \text{(metal element content (\%) / atomic weight x 10 x valency) / content of carboxyl group in cellulose fibers x 100.}$$

6. A film formed from the suspension of cellulose fibers according to any one of claims 1 to 3.

7. A molded composite, comprising a substrate and a layer of cellulose fibers formed from the suspension of cellulose fibers according to any one of claims 1 to 3 on the substrate.


**Patentansprüche**

1. Suspension aus Cellulosefasern, die eine Cellulosefaser umfasst;
worin die Cellulosefaser eine Cellulosefaser umfasst, die einen mittleren Faserdurchmesser von nicht mehr als 200 nm aufweist, wobei der Gehalt an Carboxylgruppen in der Cellulose, die die Cellulosefasern aufbaut, 0,1 bis 2 mmol/g ist und ein Metall ausgewählt aus der Gruppe bestehend aus einem mehrwertigen Metall und einem einwertigen Metall in der Cellulosefaser enthalten ist, um ein Gegenion für die Carboxylgruppe zu bilden, vorausgesetzt, dass ausgeschlossen ist, dass das Gegenion ausschließlich Natrium ist,
worin die Metallsubstitutionsrate des Gegenions für die in den Cellulosefasern enthaltenen Carboxylgruppen zum mehrwertigen Metall oder einwertigen Metall (ausgenommen Natrium) 10 % oder mehr ist, wie durch die folgende Formel definiert:

```
Metallsubstitutionsrate (%) = (Metallelementgehalt
(%)/Atomgewicht × 10 × Valenz)/Gehalt an Carboxylgruppen
in den Cellulosefasern × 100.
```

2. Suspension aus Cellulosefasern gemäß Anspruch 1, worin das mehrwertige Metallion, das das Gegenion bildet, aus der Gruppe bestehend aus Kobalt, Magnesium, Calcium, Aluminium, Zink, Kupfer und Eisen ausgewählt ist.

3. Suspension aus Cellulosefasern gemäß Anspruch 1, worin das einwertige Metallion, das das Gegenion bildet, aus der Gruppe bestehend aus Silber und Kalium ausgewählt ist.

4. Verfahren zur Herstellung der Suspension aus Cellulosefasern gemäß Anspruch 1, umfassend:

Kationenaustausch des Gegenions der Carboxylgruppe der Cellulosefasern mit einem mehrwertigen Metallkation durch Mischen der Cellulosefasern mit einem wasserlöslichen mehrwertigen Metallsalz des mehrwertigen Metallkations, um Cellulosefasern zu bilden, die ein mehrwertiges Metallkation aufweisen; oder
Kationenaustausch der Carboxylgruppe der Cellulosefasern mit einem einwertigen Metallkation eines einwertigen Metallsalzes durch Mischen der Cellulosefasern mit einem wasserlöslichen einwertigen Metallsalz des einwertigen Metallkations (außer einem Natriumsalz), um Cellulosefasern herzustellen, die das einwertige Metallkation (außer ausschließlich Natrium) aufweisen; und
Waschen der festen, einem Kationenaustausch unterzogenen Celluloserfasern mit Wasser;
Hinzufügen von Ionenaustausch-behandeltem Wasser zum filtrierten Feststoff; und
mechanisches Behandeln der Mischung, um eine Suspension der Cellulosefasern herzustellen.

5. Verfahren gemäß Anspruch 4, worin im Schritt des Kationenaustausches die Metallsubstitutionsrate des Gegenions für die in den Cellulosefasern enthaltenen Carboxylgruppen zum mehrwertigen Metall oder einwertigen Metall (außer Natrium) 10 % oder mehr ist, wie durch die folgende Formel definiert:

$$\text{Metallsubstitutionsrate (\%)} = \text{(Metallelementgehalt (\%)/Atomgewicht} \times 10 \times \text{Valenz)/Gehalt an Carboxylgruppen in den Cellulosefasern} \times 100.$$

6. Folie, gebildet aus der Suspension der Cellulosefasern gemäß irgendeinem der Ansprüche 1 bis 3.

7. Geformtes Verbundmaterial, das ein Substrat und eine Schicht aus Cellulosefasern umfasst, die aus der Suspension der Cellulosefasern gemäß irgendeinem der Ansprüche 1 bis 3 auf dem Substrat gebildet ist.

**Revendications**

1. Suspension de fibres de cellulose, comprenant une fibre de cellulose,
dans laquelle la fibre de cellulose comprend une fibre de cellulose ayant un diamètre de fibre moyen non supérieur à 200 nm, la teneur en groupes carboxyle dans la cellulose composant les fibres de cellulose est de 0,1 à 2 mmol/g, et un métal choisi dans le groupe consistant en un métal polyvalent et un métal monovalent est contenu dans la fibre de cellulose pour former un contre-ion pour le groupe carboxyle, à condition que le contre-ion de sodium uniquement soit exclu,
dans laquelle le taux de substitution de métal du contre-ion pour le groupe carboxyle contenu dans les fibres de cellulose par rapport au métal polyvalent ou au métal monovalent (à l'exclusion du sodium) est de 10 % ou plus, tel que défini par la formule suivante :

$$\text{taux de substitution de métal (\%)} = \text{(teneur en élément métallique (\%) / masse atomique x 10 x valence) / teneur en groupe carboxyle dans les fibres de cellulose} \times 100.$$

2. Suspension de fibres de cellulose selon la revendication 1, dans laquelle le métal polyvalent composant le contre-ion est choisi dans le groupe consistant en le cobalt, le magnésium, le calcium, l'aluminium, le zinc, le cuivre et le fer.

3. Suspension de fibres de cellulose selon la revendication 1, dans laquelle le métal monovalent composant le contre-ion est choisi dans le groupe consistant en l'argent et le potassium.

4. Procédé de production de la suspension de fibres de cellulose selon la revendication 1, comprenant :

l'échange de cation du contre-ion du groupe carboxyle des fibres de cellulose par un cation de métal polyvalent en mélangeant les fibres de cellulose avec un sel métallique polyvalent hydrosoluble du cation de métal polyvalent pour produire les fibres de cellulose ayant le cation de métal polyvalent ;
ou
l'échange de cation du groupe carboxyle des fibres de cellulose par un cation de métal monovalent d'un sel métallique monovalent en mélangeant les fibres de cellulose avec un sel métallique monovalent hydrosoluble du cation de métal monovalent (à l'exclusion d'un sel de sodium) pour produire les fibres de cellulose ayant le cation de métal monovalent (à l'exclusion d'un sodium unique) ;
et
le lavage avec de l'eau des fibres de cellulose solides ayant échangé le cation,
l'ajout d'eau ayant subi un échange d'ions au solide filtré ; et
le traitement par voie mécanique du mélange pour produire la suspension de fibres de cellulose.

5. Procédé selon la revendication 4, dans lequel, dans l'étape d'échange de cation, le taux de substitution de métal du contre-ion pour le groupe carboxyle contenu dans les fibres de cellulose par rapport au métal polyvalent ou au métal monovalent (à l'exclusion du sodium) est de 10 % ou plus, tel que défini par la formule suivante :

$$\text{taux de substitution de métal (\%)} = \text{(teneur en élément métallique (\%) / masse atomique x 10 x valence) / teneur en groupe carboxyle dans les fibres de cellulose x 100.}$$

6. Film formé à partir de la suspension de fibres de cellulose selon l'une quelconque des revendications 1 à 3.

7. Composite moulé, comprenant un substrat et une couche de fibres de cellulose formée à partir de la suspension de fibres de cellulose selon l'une quelconque des revendications 1 à 3 sur le substrat.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002348522 A
- JP 2008001728 A

- EP 2371893 A1

**Non-patent literature cited in the description**

- *Carbohydrate Polymers,* 2005, vol. 61, 183-190
- *Biomacromolecules,* 2009, vol. 10 (1), 162-165

- Bio MACROMOLECULES. American Chemical Society, June 2006, vol. 7